# DEMANDE DE BREVET EUROPEEN

(11) **EP 1 820 549 A2**
(43) Date de publication de la demande: **22.08.2007**
(21) Numéro de dépôt: 07300746.0
(22) Date de dépôt: 25.01.2007
(51) Int. Cl.: B01D 11/02, A61K 8/02, A61Q 5/06

(54) **Procédé de préparation d'une composition cosmétique et appareil pour la mise en oeuvre d'un tel procédé**

(30) Priorité: 27.01.2006 FR 0650308
(71) Demandeur: L'ORÉAL, 75008 Paris (FR)
(72) Inventeur: Grollier, Jean-François, 75006, Paris (FR); De la Mettrie, Roland, 78110, Le Vesinet (FR)
(74) Mandataire: Tanty, François

(57) **Abrégé**

La présente invention concerne un procédé de préparation d'une composition cosmétique, comportant les étapes consistant à :
a) faire circuler à travers au moins une enceinte contenant au moins un produit à extraire au moins un fluide et recueillir au moins une solution d'extraction dans un récipient (R),
b) délivrer le fluide dans le récipient (R) sans le faire circuler dans l'enceinte, afin d'obtenir un volume de composition prédéfini dans le récipient.

## Description

La présente invention concerne les compositions cosmétiques et plus particulièrement celles obtenues par circulation d'un fluide au contact d'un produit ayant au moins un composé pouvant être extrait par le fluide.

Les demandes de brevet européen EP 1 563 827-A2, EP 1 566 164-A1, EP 1 563 885-A1, EP 1 559 400-A1, EP 1 559 398-A1, EP 1 563 826-A1, EP 1 559 414-A1, EP 1 563 826-A1, EP 1 559 401-A1, EP 1 559 392-A1, EP 1 559 396-A1 et EP 1 566 163-A1 divulguent des procédés de préparation d'une composition cosmétique par percolation d'un fluide.

La demande WO 00/56629 divulgue une cartouche pour appareil d'extraction par percolation.

Il existe un besoin pour perfectionner les procédés de préparation de compositions cosmétiques.

Il existe encore un besoin pour préparer des compositions cosmétiques personnalisées d'une façon fiable et relativement simple et pour faciliter le conditionnement et l'utilisation des produits servant à préparer ces compositions.

L'invention vise à répondre à tout ou partie de ces besoins.

L'invention a ainsi pour objet, selon l'un de ses aspects, un procédé de préparation d'une composition cosmétique, comportant les étapes consistant à :
a) faire circuler à travers au moins une enceinte contenant au moins un produit à extraire au moins un fluide et recueillir au moins une solution d'extraction dans un récipient,
b) délivrer dans le récipient le fluide sans le faire circuler dans l'enceinte.

Les étapes a) et b) sont effectuées de façon à obtenir un volume de composition prédéfini dans le récipient.

Les deux étapes a) et b) peuvent être successives, dans l'ordre a) puis b) ou inversement, ou au moins partiellement concomitantes.

L'invention peut permettre d'obtenir, par exemple, une composition ayant une concentration souhaitée en au moins un composé en diluant plus ou moins une solution issue de l'extraction par le fluide.

L'invention peut également permettre d'obtenir, si on le souhaite, une quantité prédéfinie de composition quelle que soit la quantité de fluide utilisée pour l'extraction.

Grâce à l'invention, à partir d'une enceinte au moins, plusieurs compositions ayant des caractéristiques différentes peuvent être préparées, selon par exemple le degré de dilution recherché, ce qui peut permettre de personnaliser la composition.

Une enceinte peut être un compartiment d'une recharge, celle-ci pouvant éventuellement se présenter sous la forme d'une cartouche.

L'invention peut également faciliter le conditionnement et la conservation du ou des produits servant à préparer la composition, en permettant par exemple d'utiliser des produits non liquides.

L'invention peut permettre encore de disposer au sein d'une même enceinte de composés pulvérulents qui ne pourraient être conservés sur une longue période en solution, notamment en étant mélangés ensemble.

Enfin, l'invention peut faciliter l'utilisation de produits d'origine naturelle, notamment d'extraits végétaux ou minéraux.

La circulation du fluide dans l'enceinte peut être une percolation. Par « percolation », on désigne le passage d'un fluide à travers un milieu perméable à ce fluide, le milieu étant par exemple pulvérulent. Le milieu peut être entièrement solubilisé par le passage du fluide, le cas échéant. Le milieu peut être non alimentaire.

Le récipient, qui est par exemple un bol, peut être muni ou non d'un organe de fermeture, notamment à des fins d'agitation ou pour permettre au consommateur d'emporter la composition pour l'utiliser ailleurs que sur le lieu de préparation.

Le récipient peut éventuellement contenir au moins un composé à mélanger avec la ou les solutions issues de l'extraction, notamment un milieu cosmétiquement acceptable, par exemple une base ou un oxydant de coloration.

Le fluide, encore appelé percolat éventuellement, peut comporter un liquide et/ou un gaz, par exemple de l'eau. D'autres solvants sont utilisables, par exemple une solution alcoolique ou huileuse.

La quantité de produit contenue dans l'enceinte où l'injection a lieu peut être relativement faible, correspondant par exemple à une dose unique. La quantité de produit est par exemple inférieure ou égale à 25 cm³ ou à 10 cm³, voire à 7,5 cm³ ou 5 cm³.

Une fois l'extraction par le fluide effectuée, l'enceinte peut être éliminée, étant par exemple recyclée.

La quantité de fluide délivrée à l'étape a) et/ou à l'étape b) peut être déterminée par pesée du récipient et de son contenu, ou par mesure du volume de produit contenu dans le récipient. La quantité de fluide injecté dans l'enceinte peut être déterminée en fonction d'au moins une caractéristique de la composition, par exemple la couleur de celle-ci ou son pouvoir colorant. La quantité de fluide délivrée dans le récipient sans circuler dans l'enceinte peut viser à obtenir un volume constant de composition et/ou être déterminée en fonction d'au moins une caractéristique de la composition à obtenir.

Préalablement à la sélection de la quantité de fluide, que ce soit celle destinée à être injectée dans l'enceinte ou celle destinée à être délivrée directement dans le récipient, au moins une information liée à une personne à traiter avec la composition peut être acquise, et la sélection de la quantité de fluide peut être effectuée sur la base au moins de cette information.

Plusieurs enceintes peuvent être disposées sur l'appareil d'extraction, ce qui permet de réaliser un mélange, par exemple. Ces enceintes peuvent appartenir ou non à une même recharge.

Le fluide peut circuler de façon simultanée ou non dans les différentes enceintes.

Le fluide peut être injecté dans une pluralité d'enceintes à l'aide d'une pluralité d'injecteurs, ceux-ci pouvant être respectivement associés aux différentes enceintes. L'utilisation de plusieurs injecteurs peut réduire le risque de contamination d'une enceinte par un produit provenant d'une autre enceinte. Le ou les injecteurs peuvent subir, le cas échéant, entre les étapes d'injection de fluide, un nettoyage, par exemple par circulation du fluide dans et/ou sur l'injecteur. Le ou les injecteurs peuvent encore être amovibles afin de faciliter leur nettoyage.

L'une au moins des enceintes peut comporter un agent de coloration des matières kératiniques, par exemple de la peau, des muqueuses, des cheveux et autres fibres kératiniques telles que les cils et sourcils.

Différentes enceintes d'une même recharge peuvent comporter des agents de coloration différents, voire un même agent de coloration à des concentrations différentes.

Une même recharge peut comporter des agents de coloration permettant d'obtenir plusieurs nuances d'une même couleur.

Le ou les agents de coloration peuvent être destinés à réaliser une coloration directe ou d'oxydation, éclaircissante ou non. Il peut s'agir par exemple d'une coloration ton sur ton.

Le ou les agents de coloration peuvent être des colorants directs ou des colorants d'oxydation.

Lorsque plusieurs enceintes sont présentes préalablement à la sélection d'au moins une enceinte où s'effectue l'injection, au moins une information liée à une personne à traiter avec la composition cosmétique ou liée à une caractéristique à obtenir peut être acquise, et la sélection de la ou des enceintes dans laquelle ou lesquelles l'injection a lieu peut être effectuée sur la base de cette information au moins. L'information peut comporter une couleur que l'on cherche à reproduire, par exemple celle de la peau ou des cheveux de la personne à traiter avec la composition.

La sélection peut encore avoir pour but, par exemple, de reproduire une couleur choisie par un utilisateur sur un nuancier ou méchier ou correspondant à une référence commerciale.

Les produits contenus dans les enceintes peuvent être pulvérulents. Une même enceinte peut comporter, le cas échéant, au moins deux composés pulvérulents. Ces deux composés peuvent être mélangés uniformément ou non au sein de l'enceinte. Les composés peuvent par exemple être disposés dans l'enceinte en strates successives.

La température du fluide injecté dans une enceinte peut être supérieure à 80 °C, ce qui peut favoriser la solubilisation de certains composés, le fluide étant éventuellement sous phases vapeur et liquide lors de l'injection, ce qui peut faciliter l'extraction.

La pression d'injection est de préférence supérieure ou égale à 1 bar (10⁵ Pa), voire supérieure ou égale à 3 bars et encore plus préférentiellement supérieure ou égale à 10 bars, allant par exemple de 10 à 50 bars.

La ou les enceintes peuvent être définies au moins partiellement par une première paroi pouvant être traversée, par exemple perforée, par un injecteur de l'appareil d'extraction.

La ou les enceintes peuvent également être définies au moins partiellement par une deuxième paroi pouvant s'ouvrir sous l'effet de la pression d'injection du fluide dans l'enceinte, par exemple du fait de la déformation de la deuxième paroi contre au moins un relief adapté à provoquer son ouverture. La deuxième paroi est par exemple déformée contre une grille agencée pour que la déformation s'accompagne de l'ouverture de l'enceinte tout en permettant à la deuxième paroi de retenir sensiblement le produit non solubilisé par le fluide ayant circulé dans l'enceinte.

Les première et deuxième parois comportent par exemple au moins une couche d'un matériau pouvant être déchiré et/ou perforé relativement aisément, par exemple une couche comportant un métal, par exemple de l'aluminium, d'épaisseur inférieure ou égale à 0,1 mm par exemple.

L'invention a encore pour objet, selon un autre de ses aspects, un appareil de préparation d'une composition cosmétique par circulation d'un fluide dans au moins une enceinte contenant au moins un produit à extraire, cet appareil comportant :
- un système de support de l'enceinte,
- un système d'injection pour :

- d'une part injecter le fluide à travers l'enceinte afin de produire au moins une solution recueillie dans un récipient,
- d'autre part délivrer le fluide dans le récipient sans circulation du fluide à travers l'enceinte.

Le système de support peut être adapté à recevoir plusieurs enceintes.

L'appareil d'extraction peut être agencé de manière à permettre la sélection d'une ou plusieurs enceintes.

L'un au moins du système d'injection et du système de support peut être agencé de manière à permettre de sélectionner la ou les enceintes dans laquelle ou lesquelles le fluide est injecté.

Les enceintes peuvent être rapportées sur l'appareil d'extraction ou appartenir à celui-ci.

Les enceintes peuvent appartenir à une même recharge ou non. Cette recharge peut comporter une cartouche renfermant une pluralité d'enceintes. La recharge peut encore comporter une pluralité de capsules solidaires au moins lors de l'utilisation, définissant respectivement les différentes enceintes.

L'appareil peut comporter un système de collecte des solutions provenant de la circulation du fluide dans les enceintes, qui peut être agencé pour mélanger les solutions.

Le système de collecte peut comporter un récipient placé sous les enceintes et/ou des canaux permettant de guider l'écoulement du fluide après traversée des enceintes.

L'appareil peut comporter une pluralité d'injecteurs.

Chaque enceinte peut être associée à au moins un joint d'étanchéité agencé pour coopérer avec au moins un injecteur. Ce joint d'étanchéité est par exemple une membrane en un matériau élastiquement déformable, agencée pour être traversée par l'injecteur.

Chaque enceinte peut être sensiblement étanche à l'air.

En présence de plusieurs enceintes, le système de support peut être agencé pour permettre de déplacer les enceintes relativement au système d'injection. Ce déplacement peut s'effectuer manuellement ou de façon motorisée, en rotation ou en translation ou autrement encore, par exemple de façon à amener au moins un injecteur à pénétrer dans une enceinte sélectionnée. L'injecteur peut par exemple suivre, lors du déplacement, une trajectoire au cours de laquelle il passe en regard d'au moins une autre enceinte.

L'appareil d'extraction peut encore comporter plusieurs injecteurs, ce qui peut éviter éventuellement la nécessité d'un tel déplacement.

La sélection de la ou des enceintes où s'effectue l'injection peut encore être accomplie en permettant à l'utilisateur de positionner la recharge dans l'appareil d'extraction de telle façon que l'injection ait lieu dans une ou plusieurs enceintes sélectionnées.

Le cas échéant, l'utilisateur peut ne sélectionner qu'une seule enceinte à la fois, effectuer l'injection et repositionner la recharge dans l'appareil d'extraction de façon à sélectionner une autre enceinte, lorsque la composition doit être préparée à partir de produits provenant de plusieurs enceintes.

L'appareil d'extraction peut comporter un système de chauffage pour porter la température du fluide à plus de 80 °C avant l'injection, comme mentionné précédemment.

Lorsque la ou les enceintes comportent au moins un agent de coloration, l'appareil d'extraction peut comporter un système de sélection agencé d'une part pour permettre à un utilisateur de sélectionner une teinte parmi plusieurs et d'autre part pour commander l'injection du fluide afin de recueillir une composition cosmétique dont la teinte correspond à la teinte sélectionnée. Le système de sélection peut par exemple agir sur la quantité de fluide délivrée sans passer par l'enceinte et éventuellement sur la ou les quantités de fluide délivrées dans la ou les enceintes.

L'appareil d'extraction peut comporter un capteur permettant de déterminer la quantité de composition présente dans le récipient. Ce capteur est par exemple un capteur de poids et/ou de volume permettant d'évaluer la quantité de composition présente dans le récipient.

Dans un exemple de mise en oeuvre de l'invention, à chaque fois qu'un liquide est délivré dans le récipient, la masse et/ou le volume de produit présent dans le récipient est déterminé sensiblement en temps réel par une pesée de celui-ci et/ou une mesure du volume de composition contenu dans celui-ci et la distribution du fluide peut être interrompue lorsque la quantité prévue de fluide a été distribuée.

L'appareil d'extraction peut encore comporter un capteur de niveau afin de déterminer par exemple le niveau de liquide dans le récipient et/ou dans un réservoir contenant le fluide à injecter.

L'appareil d'extraction peut comporter au moins un organe de commande permettant par exemple de modifier la durée d'injection du fluide dans l'enceinte. L'appareil d'extraction peut être agencé pour délivrer directement dans le récipient, quelle que soit la durée d'injection précitée, la quantité de fluide complémentaire permettant d'obtenir un volume prédéfini de composition, ce volume étant éventuellement réglable par l'utilisateur. L'organe de commande peut comporter un bouton de réglage rotatif ou à glissière, associé éventuellement à des graduations.

L'appareil d'extraction peut être agencé pour recevoir au moins une information relative à la concentration en au moins un produit dans la solution recueillie dans le récipient en fonction de la durée d'injection dans l'enceinte contenant ce produit et pour calculer les quantités de fluide à injecter dans l'enceinte et dans le récipient en fonction de cette information, afin d'obtenir une concentration souhaitée dans le récipient.

L'information est par exemple générée par un système informatique à partir d'un identifiant présent sur la recharge.

L'invention pourra être mieux comprise à la lecture de la description détaillée qui va suivre, d'exemples de mise en oeuvre non limitatifs de celle-ci, et à l'examen du dessin annexé, sur lequel :
- la figure 1 représente de façon schématique, en perspective, un exemple de recharge contenant un produit cosmétique à extraire,
- la figure 2 est une coupe axiale de la recharge de la figure 1,
- la figure 3 représente de manière schématique et partielle, en perspective, un exemple d'appareil d'extraction,
- la figure 4 est un schéma simplifié d'un exemple de circuit d'alimentation de l'appareil d'extraction,
- la figure 5 est une vue analogue à la figure 2 de la recharge en place dans l'appareil d'extraction,
- la figure 6 illustre la mise en oeuvre de l'invention avec plusieurs enceintes,
- la figure 7 est une vue analogue à la figure 4 d'une variante de réalisation du circuit d'alimentation,
- la figure 8 est une vue analogue à la figure 1 d'une variante de réalisation de la recharge,
- la figure 9 est une section transversale du corps de la recharge de la figure 8,
- la figure 10 est une vue analogue à la figure 2 d'une variante de réalisation de la recharge,
- la figure 11 est une vue analogue à la figure 3 d'une variante de réalisation de l'appareil d'extraction,
- la figure 12 représente de façon schématique, en perspective, un autre exemple de recharge et le positionnement correspondant des injecteurs,
- la figure 13 est une section selon XIII-XIII de la figure 12,
- la figure 14 représente, en vue de dessus, un autre exemple de réalisation de la recharge,
- la figure 15 est une section selon XV-XV de la figure 14,
- la figure 16 est une vue de dessus d'une variante de réalisation de la recharge, et
- la figure 17 représente, de façon partielle et schématique, une variante de réalisation de l'appareil d'extraction, en cours d'utilisation de la recharge de la figure 16.

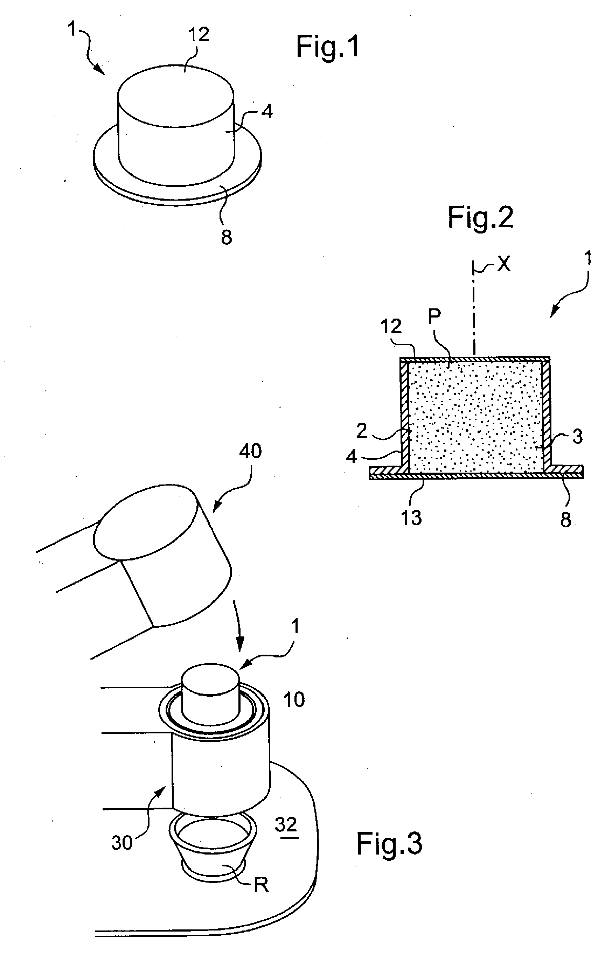

On a représenté aux figures 1 et 2 une recharge 1 contenant au moins un produit cosmétique P.

La recharge 1 comporte un corps tubulaire 4 et des première et deuxième parois 12 et 13 définissant une enceinte 2 contenant le produit P.

Dans l'exemple illustré, la première paroi 12 est réalisée d'une seule pièce avec le corps 4, par exemple par moulage de matière plastique ou emboutissage d'un matériau en feuille comportant par exemple une couche de métal.

La deuxième paroi 13 est par exemple un film qui peut comporter au moins une couche d'un métal et qui est fixé, par exemple thermosoudé, sur une collerette 8 réalisée d'une seule pièce avec le corps 4.

L'homme du métier pourra utilement se référer pour la fabrication de la recharge 1 à celles existant pour la préparation de boissons par percolation, de type « expresso ».

Le produit P est par exemple pulvérulent et peut être extrait par circulation d'un fluide dans l'enceinte 2, la concentration en produit dans la solution quittant l'enceinte étant par exemple fonction de la durée d'injection et des conditions d'injection.

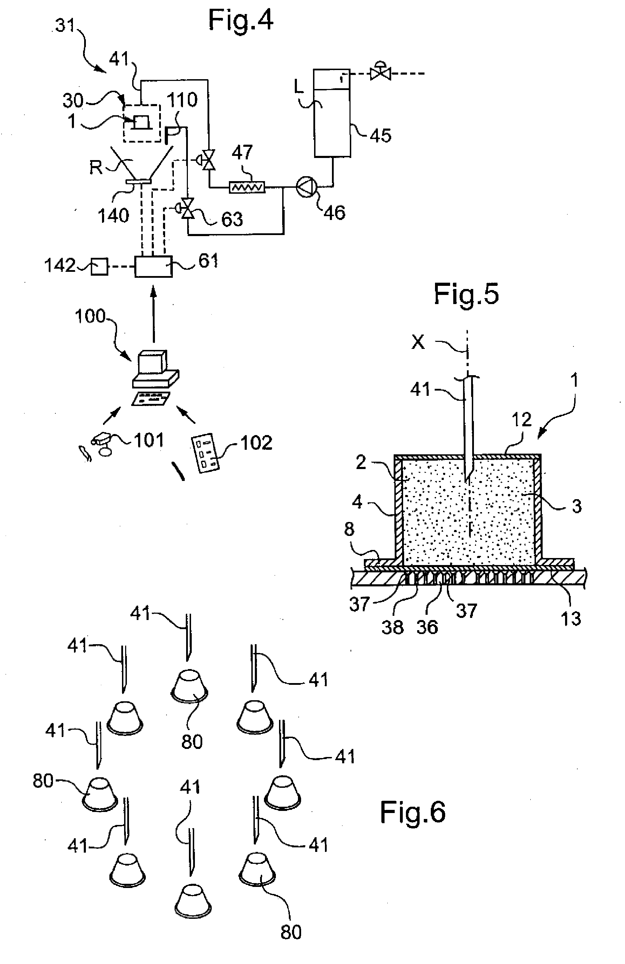

Pour utiliser la recharge 1 de la figure 1, l'utilisateur peut la placer sur un système de support 30 d'un appareil d'extraction 31 comportant également un système d'injection 40, tel qu'illustré aux figures 3 et 4.

L'appareil d'extraction 31 comporte dans l'exemple considéré un espace 32 sous le système de support 30 pour accueillir un récipient R permettant de recueillir une solution provenant de la percolation d'un fluide dans l'enceinte 2.

Le système de support 30 peut comporter, comme illustré à la figure 5, une grille 36 pourvue de reliefs 37 contre lesquels la deuxième paroi 13 peut être appliquée sous la pression du fluide injecté.

La deuxième paroi 13 est agencée pour être perforée par les reliefs 37 de la grille, lors de l'injection, sous l'effet de la pression régnant dans l'enceinte, ce qui permet au fluide injecté de s'écouler par des canaux 38 de la grille 36 vers le récipient R.

L'ouverture de la deuxième paroi 13 peut avantageusement s'effectuer de façon à sensiblement retenir dans l'enceinte considérée les particules de produit P non solubilisées.

Le récipient R peut être suffisamment large pour recueillir la solution provenant de l'enceinte compte tenu de son positionnement. Le cas échéant, un système de collecte peut être prévu pour l'acheminer dans le récipient lorsque l'enceinte n'est pas située entièrement à l'aplomb de celui-ci.

Le système d'injection 40 comprend au moins un injecteur 41 capable de franchir la première paroi 12 et de pénétrer dans l'enceinte sélectionnée.

L'appareil d'extraction 31 peut comporter des moyens d'étanchéité non représentés permettant de garantir, si nécessaire, une pénétration étanche de l'injecteur 41 dans l'enceinte sélectionnée.

Ces moyens d'étanchéité comportent par exemple au moins un joint d'étanchéité s'appliquant extérieurement sur la recharge, au moins lors de l'injection.

L'appareil d'extraction 31 peut comporter un circuit d'alimentation en fluide d'extraction ayant, comme représenté de façon schématique à la figure 4, au moins un réservoir 45 pour contenir le liquide L destiné à être injecté, une pompe 46 et un organe de chauffage 47 permettant de porter le liquide L à la température souhaitée et de créer le cas échéant de la vapeur. Celle-ci peut contribuer à générer la pression d'injection recherchée.

Dans l'exemple considéré, la pression d'injection du fluide est par exemple d'au moins 3 bars (3.10⁵ Pa) et préférentiellement d'au moins 10 bars et la température d'injection par exemple d'au moins 80 °C.

La température du fluide peut notamment être suffisante pour que le fluide présente des phases liquides et gazeuses lorsqu'il est injecté dans l'enceinte.

Le réservoir 45 de l'appareil d'extraction peut être rempli manuellement ou de façon automatique en étant relié à une conduite d'eau, par exemple par l'intermédiaire d'une électrovanne.

Le réservoir 45 peut être amovible, le cas échéant, afin de faciliter son remplissage manuel.

L'organe de chauffage 47 peut comporter une résistance électrique.

L'appareil d'extraction 31 peut comporter en outre un capteur de niveau, utile par exemple pour détecter le besoin de remplissage du réservoir 45 ou permettre le remplissage du récipient R avec une quantité totale de composition prédéfinie.

L'appareil d'extraction comporte une sortie 110 permettant de distribuer dans le récipient R le liquide L sans contact avec le ou les produits contenus dans la recharge, afin par exemple de diluer dans le récipient la ou les solutions issues de la percolation et obtenir un volume de composition et/ou une concentration prédéfinies.

L'alimentation de la sortie 110 peut se faire par le biais d'une électrovanne 63 ou de tout autre moyen de contrôle de la quantité de fluide délivrée, telle que par exemple une pompe.

L'électrovanne 63 peut être contrôlée par un système de contrôle 61 de façon par exemple à avoir un volume final de composition dans le récipient correspondant à une valeur prédéfinie.

L'appareil d'extraction peut comporter un capteur de poids 140 placé sous le récipient R, utile pour déterminer la quantité de fluide délivrée dans celui-ci.

Le capteur de poids 140 peut être relié au système de contrôle 61.

L'appareil d'extraction peut comporter un organe de commande 142 permettant de modifier la durée d'injection du fluide dans l'enceinte, afin par exemple d'obtenir une concentration en produit extrait plus ou moins grande.

Le système de contrôle 61 peut être agencé pour contrôler le fonctionnement du circuit d'alimentation de façon à obtenir, quel que soit le réglage de l'organe de commande, un volume constant de composition dans le récipient, grâce par exemple à l'information délivrée par le capteur de poids 140.

L'organe de commande 142 comporte par exemple un bouton rotatif ou à glissière et l'appareil d'extraction peut comporter des graduations permettant à l'utilisateur de repérer un réglage particulier.

On a également illustré à la figure 4 la possibilité pour le circuit d'alimentation d'échanger des informations avec un système informatique 100 qui comporte par exemple au moins un micro-ordinateur, assistant personnel numérique, terminal relié à un réseau ou téléphone portable, voire qui est intégré à l'appareil d'extraction.

Ce système informatique 100 peut être associé par exemple à un système d'acquisition d'informations comportant par exemple une caméra 101 ou tout autre dispositif d'analyse des matières kératiniques, par exemple de la couleur de la peau ou des cheveux.

Le système informatique 100 peut également être associé à un nuancier ou méchier 102 ou autre outil d'évaluation, par exemple un questionnaire.

Le système informatique 100 peut être agencé de manière à permettre à un utilisateur de sélectionner au moins une caractéristique de la composition cosmétique à préparer. Cette caractéristique est par exemple une couleur.

Le système informatique 100 peut être utilisé pour permettre à l'utilisateur de sélectionner une teinte souhaitée et le système informatique 100 peut être agencé pour adresser au système de contrôle 61 des informations permettant à ce dernier de commander l'injection du fluide de façon à obtenir une composition ayant les propriétés recherchées.

Par exemple, l'enceinte 2 peut contenir au moins un agent de coloration et le système de contrôle 61 peut contrôler les quantités de fluide injectées dans l'enceinte 2 et dans le récipient R sans passer par l'enceinte de façon à obtenir une composition ayant la concentration souhaitée en agent de coloration.

Le système de contrôle 61 peut être agencé par exemple de telle sorte que quelle que soit la teinte demandée, parmi celles susceptibles d'être obtenues, un même volume de composition soit préparé dans le récipient. Cela peut faciliter l'application de la composition et/ou son mélange avec un composé présent initialement dans le récipient ou rajouté à la composition, par exemple une base ou un oxydant de coloration.

En présence du système informatique 100, l'appareil d'extraction peut ne pas comporter d'organe de commande 142 tel que décrit ci-dessus, le fonctionnement du circuit d'alimentation dépendant par exemple seulement des signaux reçus par le système de contrôle 61 en provenance du système informatique 100.

L'homme du métier pourra se référer utilement, le cas échéant, aux appareils d'extraction utilisés pour préparer des boissons de type « expresso », dont les circuits d'alimentation sont susceptibles d'être au moins partiellement reproduits.

De tels appareils sont divulgués par exemple dans les publications AT 168405, US 2 688 911, DE 3 243 870, IT 1265636 et WO 2004/006740-A2.

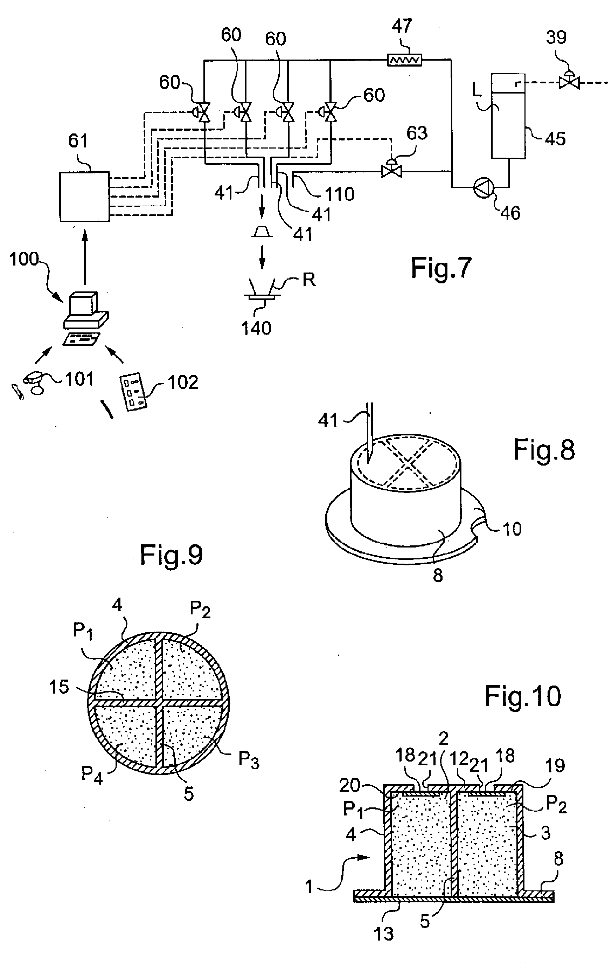

L'appareil d'extraction peut comporter, le cas échéant, comme illustré aux figures 6 et 7, une pluralité d'injecteurs 41 associés respectivement à une pluralité d'enceintes définies par exemple par des capsules indépendantes 80. Ces enceintes peuvent contenir des produits différents. Le système de support de l'appareil d'extraction comporte par exemple une pluralité de logements permettant d'accueillir ces capsules.

L'injection peut se faire dans une capsule sélectionnée en faisant pénétrer l'injecteur dans l'enceinte correspondante, par exemple par un mouvement de l'injecteur et/ou de la capsule, ce mouvement étant par exemple provoqué par l'action de l'utilisateur sur l'un au moins du système d'injection et du système de support. Ce mouvement peut encore résulter d'un entraînement motorisé, pneumatique ou hydraulique, étant par exemple assisté par la pression du fluide.

Le circuit d'alimentation peut comporter une pluralité d'organes de contrôle du débit 60, associés chacun à un injecteur 41 et commandés par un système de contrôle 61 de façon à ce que seul le ou les injecteurs 41 sélectionnés soient alimentés par le fluide à injecter.

La quantité de fluide injectée dans la ou les enceintes sélectionnées peut être prédéfinie ou choisie en fonction par exemple de la concentration recherchée pour le ou les composés extraits par percolation.

Les organes de contrôle du débit 60 sont par exemple des électrovannes proportionnelles permettant un réglage du débit dans chaque injecteur autre qu'un réglage en tout ou rien. Il s'agit par exemple d'organes de contrôle 60 piézoélectriques.

En réglant les différents débits, plusieurs nuances peuvent être obtenues, par exemple.

Les injecteurs 41 sont par exemple agencés de manière à tous pénétrer dans les enceintes, l'injection du fluide n'ayant lieu que dans la ou les enceintes sélectionnées grâce au contrôle du débit.

En variante, le système d'injection est agencé de telle manière que les injecteurs et/ou les enceintes correspondantes puissent être déplacés les uns relativement aux autres de façon à ce que seul le ou les injecteurs alimentés pénètrent dans la ou les enceintes correspondantes. La pression du fluide d'injection peut par exemple contribuer à déplacer l'injecteur lorsque celui-ci est alimenté, de façon à ce qu'il pénètre dans l'enceinte.

Plusieurs enceintes peuvent encore être associées à une même recharge.

On a représenté à titre d'illustration aux figures 8 et 9 une recharge 1 se présentant sous la forme d'une cartouche.

La recharge 1 comporte plusieurs produits P₁ à P₄ respectivement contenus de manière séparée dans quatre enceintes définies par celle-ci.

Dans l'exemple considéré, les enceintes sont formées par des compartiments du corps 4, étant séparées par des cloisons 5 réalisées par exemple par moulage de matière d'une seule pièce avec le corps 4.

La collerette 8 peut être munie d'un détrompeur 10 se présentant par exemple sous la forme d'un relief en creux ou en saillie, par exemple une encoche.

En l'absence de détrompeur 10, le corps 4 peut être réalisé, par exemple, avec une forme non symétrique de révolution, de façon à ne permettre son positionnement dans l'appareil d'extraction associé que d'une seule manière.

Le volume de chacune des enceintes est de préférence inférieur ou égal à 25 cm³ ou 10 cm³, étant par exemple compris entre 1 et 5 cm³.

La recharge 1 peut dans la variante de la figure 10 comporter une première paroi 12 qui est traversée par des ouvertures 21 respectivement associées aux différentes enceintes. Ces ouvertures 21 peuvent être obturées de façon à permettre l'entrée des injecteurs de l'appareil d'extraction associé. L'obturation peut se faire par exemple au moyen d'opercules 18 thermosoudés sur la face intérieure 20 de la première paroi 12. En variante, les opercules 18 sont fixés extérieurement sur la première paroi 12 ou surinjectés sur celle-ci, dans une matière élastomère par exemple.

Les opercules 18 peuvent encore être réalisés d'une seule pièce avec la première paroi 12 et dans la même matière, en donnant localement à la première paroi 12 une épaisseur réduite ou en réalisant des zones d'affaiblissement. Les opercules 18 peuvent être agencés pour être perforés ou détachés au moins partiellement de la première paroi 12, lors de l'injection.

La recharge 1 comporte par exemple un ou plusieurs agents de coloration des matières kératiniques, de couleurs différentes.

L'utilisateur peut sélectionner l'enceinte contenant le produit correspondant à la couleur qu'il cherche à obtenir.

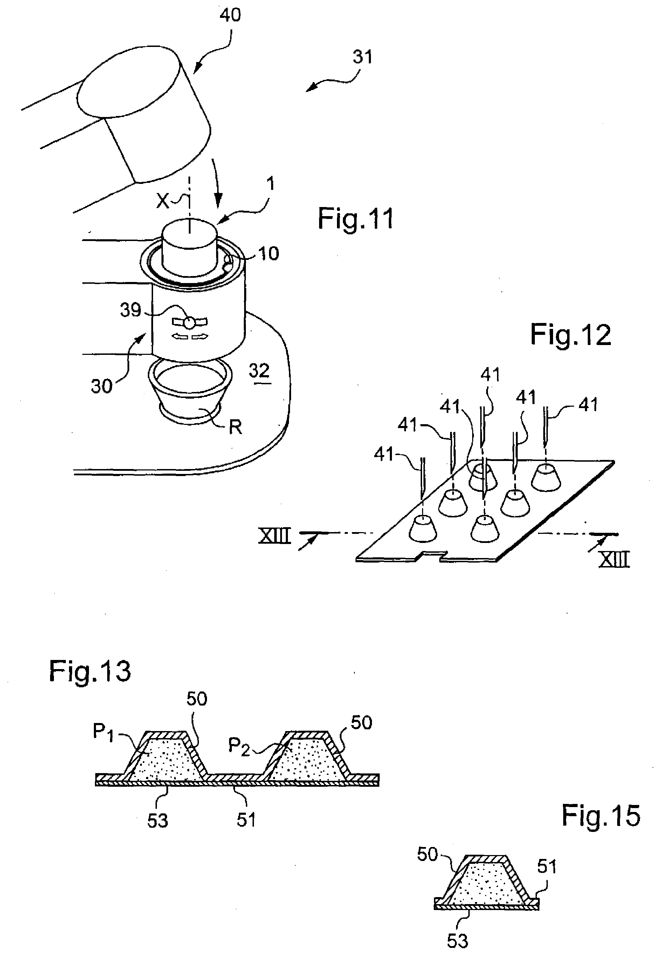

Lorsque l'appareil d'extraction ne comporte qu'un seul injecteur, afin de permettre à l'utilisateur de sélectionner l'enceinte dans laquelle le fluide est injecté, l'appareil d'extraction 31 peut comporter, comme illustré à la figure 11, un système de sélection comportant par exemple un organe de manoeuvre 39 que l'utilisateur peut actionner pour faire tourner la recharge 1 autour de son axe X afin de la positionner avec l'orientation angulaire permettant à l'injecteur 41 d'aboutir dans l'enceinte dans laquelle soit s'effectuer la percolation.

Si nécessaire, l'utilisateur peut effectuer plusieurs injections successives dans différentes enceintes et recueillir les solutions issues de la percolation dans un même récipient, afin de les mélanger.

L'utilisateur peut par exemple sélectionner au moins un couple d'enceintes permettant d'obtenir par mélange des solutions d'extraction une nuance colorée ou colorante particulière.

La recharge 1 peut se présenter autrement que sous la forme d'une cartouche et par exemple, comme illustré aux figures 12 et 13, avec des enceintes définies par des capsules 50 portées par un élément de support 51 qui se présente par exemple sous la forme d'une plaquette.

Les capsules 50 peuvent comporter une première paroi formée par exemple par emboutissage ou thermoformage d'un matériau en feuille, par exemple de l'aluminium ou un complexe comportant de l'aluminium. Cette paroi ainsi emboutie ou thermoformée peut définir l'élément de support 51 autour des capsules 50.

Les capsules 50 peuvent être fermées par une deuxième paroi 53 qui est par exemple un film thermoscellé sur l'élément de support 51.

L'élément de support 51 peut comporter un détrompeur 56 se présentant par exemple sous la forme d'une encoche.

L'élément de support 51 et les capsules 50 peuvent encore, le cas échéant, être réalisés séparément.

L'élément de support 51 est par exemple réalisé sous la forme d'une plaquette avec des trous et les capsules sont fixées dans ces trous, en fonction par exemple des produits que l'on souhaite associer au sein d'une même recharge.

La fixation des capsules dans les trous de l'élément de support peut être amovible ou non. Une fixation amovible peut permettre le cas échéant à l'utilisateur de remplacer les capsules utilisées par de nouvelles. La fixation amovible peut s'effectuer par friction et/ou encliquetage par exemple.

Dans l'exemple des figures 12 et 13, les capsules 50 sont disposées en rangées.

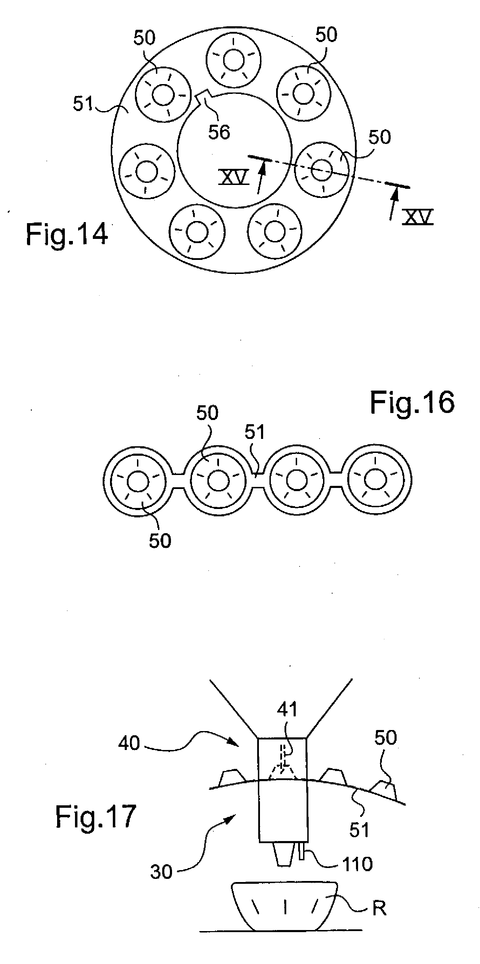

Dans la variante des figures 14 et 15, l'élément de support 51 présente une forme annulaire et dans l'exemple de la figure 16 une forme de bande.

Pour utiliser la recharge de la figure 16, l'utilisateur peut par exemple placer celle-ci dans un appareil d'extraction entre un système de support 30 et un système d'injection 40, comme illustré à la figure 17.

L'utilisateur positionne l'élément de support 51 dans l'appareil d'extraction en fonction de l'enceinte dans laquelle il souhaite injecter le fluide. Seule la capsule correspondant à cette enceinte est perforée par l'injecteur 41.

Des recharges comportant plusieurs enceintes peuvent encore être utilisées avec des appareils d'extraction comportant plusieurs injecteurs.

Lorsque l'injection a lieu dans plusieurs enceintes, la quantité de fluide délivrée directement dans le récipient peut être déterminée de façon à obtenir un volume final de composition prédéfini.

L'invention n'est pas limitée aux exemples de mise en oeuvre illustrés.

On peut notamment donner à la recharge d'autres formes encore que celles représentées, par exemple une forme de barquette, sachet ou autre. Des capsules ou sachets contenant des produits différents peuvent être contenus dans un même conditionnement.

Le remplissage des enceintes peut avoir lieu au moment de la fabrication. En variante, les enceintes peuvent être remplies en fonction de la demande d'un consommateur, par exemple.

Différents compartiments d'une même recharge peuvent être fabriqués séparément puis assemblés.

Les enceintes peuvent également être, lors de la fabrication, dans une configuration déployée et cette configuration peut être modifiée au cours de la fabrication et/ou de l'utilisation.

La circulation du fluide dans une enceinte sélectionnée peut s'effectuer verticalement ou autrement.

Dans les exemples illustrés, l'injection dans une enceinte sélectionnée s'effectue par un injecteur unique, mais en variante elle peut s'effectuer avec plusieurs injecteurs, afin d'améliorer la mise en contact du fluide avec le produit contenu dans l'enceinte.

Une recharge définissant une ou plusieurs enceintes peut être associée à au moins une information permettant à l'appareil d'extraction ou à un système informatique associé au système d'extraction de connaître l'évolution de la concentration en produit extrait en fonction de la quantité de fluide injectée et des conditions d'injection, le cas échéant.

Cela peut faciliter le calcul des quantités de fluide à délivrer dans l'enceinte et dans le récipient pour obtenir une concentration recherchée.

L'information associée à la recharge comporte par exemple un identifiant.

L'expression « comportant un » doit être comprise comme étant synonyme de « comportant au moins un », sauf si le contraire est spécifié.

## Revendications

1. Procédé de préparation d'une composition cosmétique, comportant les étapes consistant à :
a) faire circuler à travers au moins une enceinte (2) contenant au moins un produit à extraire au moins un fluide et recueillir au moins une solution d'extraction dans un récipient (R),
b) délivrer le fluide dans le récipient (R) sans le faire circuler dans l'enceinte, afin d'obtenir un volume de composition prédéfini dans le récipient.

2. Procédé selon la revendication 1, l'étape b) suivant l'étape a).

3. Procédé selon la revendication 1 ou 2, dans lequel la quantité de fluide injecté dans l'enceinte (2) est déterminée en fonction d'au moins une caractéristique de la composition à obtenir.

4. Procédé selon l'une quelconque des revendications 1 à 3, dans lequel la quantité de fluide délivrée dans le récipient (R) sans circuler dans l'enceinte (2) est déterminée en fonction d'au moins une caractéristique de la composition à obtenir.

5. Procédé selon la revendication 3 ou 4, la caractéristique comportant la couleur ou le pouvoir colorant de la composition.

6. Procédé selon l'une des revendications 3 à 5, dans lequel au moins une information liée à une personne à traiter avec la composition est acquise, et dans lequel la quantité de fluide est déterminée sur la base au moins de cette information.

7. Procédé selon l'une quelconque des revendications précédentes, dans lequel la quantité de fluide délivrée à l'étape b) est choisie de façon à avoir un volume de composition constant dans le récipient quelle que soit la quantité délivrée à l'étape a).

8. Procédé selon l'une quelconque des revendications précédentes, dans lequel la quantité de fluide délivrée à l'étape a) et/ou à l'étape b) est déterminée par pesée du récipient et de son contenu.

9. Procédé selon l'une quelconque des revendications 1 à 7, dans lequel la quantité de fluide délivrée à l'étape a) et/ou à l'étape b) est déterminée par mesure du volume de produit contenu dans le récipient.

10. Procédé selon l'une quelconque des revendications précédentes, le fluide comportant de l'eau.

11. Procédé selon la revendication 10, le fluide étant de l'eau.

12. Procédé selon l'une quelconque des revendications précédentes, le fluide étant injecté dans l'enceinte à une température supérieure à 80 °C.

13. Procédé selon l'une quelconque des revendications précédentes, le fluide étant injecté dans l'enceinte sous une pression supérieure ou égale à 1 bar, mieux 3 bars, encore mieux 10 bars.

14. Procédé selon l'une quelconque des revendications précédentes, le fluide injecté dans l'enceinte étant sous phases vapeur et liquide.

15. Procédé selon l'une quelconque des revendications précédentes, le fluide étant délivré dans le récipient sans circuler dans l'enceinte à une température inférieure ou égale à 80 °C.

16. Procédé selon l'une quelconque des revendications 1 à 15, l'enceinte étant sélectionnée parmi une pluralité d'enceintes contenant des produits différents et disposées sur un même appareil d'extraction (31) et/ou faisant partie d'une même recharge (1).

17. Procédé selon la revendication 16, les enceintes appartenant à une même recharge (1).

18. Procédé selon la revendication 16, les enceintes n'appartenant pas à une même recharge.

19. Procédé selon l'une quelconque des revendications 1 à 18, dans lequel la ou les enceintes sont définies au moins partiellement par une première paroi (12) pouvant être traversée par un injecteur (41) d'un appareil d'extraction et par une deuxième paroi (13) pouvant s'ouvrir sous l'effet de la pression d'injection du fluide dans l'enceinte.

20. Appareil de préparation d'une composition cosmétique, par circulation d'au moins un fluide dans au moins une enceinte contenant au moins un produit à extraire, cet appareil comportant :
- un système de support de l'enceinte,
- un système d'injection pour :
- d'une part injecter le fluide à travers l'enceinte afin de produire au moins une solution recueillie dans un récipient,
- d'autre part délivrer le fluide dans le récipient sans circulation du fluide à travers l'enceinte.

21. Appareil selon la revendication 20, le système de support étant agencé pour recevoir une pluralité d'enceintes.

22. Appareil selon l'une des revendications 20 et 21, comportant un capteur de poids et/ou de volume (140) agencé pour évaluer la quantité de produit dans le récipient.

23. Appareil selon l'une quelconque des revendications 20 à 22, comportant un système de contrôle (61) agencé pour contrôler la quantité de fluide délivrée dans le récipient sans contact avec le ou les produits contenus dans l'enceinte.

24. Appareil selon l'une quelconque des revendications 20 à 23, le fluide injecté étant sous une pression d'au moins 3 bars et à une température supérieure à 80 °C.

25. Appareil selon la revendication 24, le fluide injecté étant sous phases vapeur et liquide.

26. Appareil selon l'une quelconque des revendications 20 à 25, le fluide étant de l'eau.

27. Ensemble comportant :
- un appareil tel que défini dans l'une des revendications 20 à 26,
- une recharge comportant au moins une enceinte contenant au moins un produit cosmétique à extraire par circulation d'un fluide dans l'enceinte.
